Europäisches Patentamt

European Patent Office

Office européen des brevets

(11) Publication number: 0 315 355
A2

# (12) EUROPEAN PATENT APPLICATION

(21) Application number: 88310024.0

(22) Date of filing: 25.10.88

(51) Int. Cl.⁴: **B25G 3/02**

(30) Priority: 04.11.87 US 117188

(43) Date of publication of application:
10.05.89 Bulletin 89/19

(84) Designated Contracting States:
BE DE FR GB IT LU NL SE

(71) Applicant: EMHART INDUSTRIES, INC.
426 Colt Highway
Farmington Connecticut 06032(US)

(72) Inventor: Stoner, John Michael, Jr.
804 Nissley Drive
Middletown Pennsylvania 17057(US)

(74) Representative: Stagg, Diana Christine et al
Emhart Patents Department Lyn House 39
The Parade
Oadby Leicester LE2 5BB(GB)

(54) Collar for hand tools.

(57) A moulded plastic collar for use on hand tools of the type having an elongated socket (14) to receive a tool handle (12) includes an outer wall defined by first and second tapered surfaces (20,22) extending lengthwise respectively from each end of the collar towards the middle thereof to form relatively thin wall portions (32,34) at each end and a relatively thick wall portion (24) at the interface of the first and second tapered surfaces. The inner wall of the collar is defined by a first relatively large diameter section (28) and a second section defined by a relatively small diameter section (26). The interface of the first and second sections define a radially extending flange-like surface (30). The end of the socket (14) engages the flange-like surface (30). The relatively large diameter section (28) of the inner wall overlays the outer wall of the socket (14) and the relatively small diameter section (26) of the inner wall overlays the outer wall of the tool handle (12).

FIG. 1

## COLLAR FOR HAND TOOLS

This invention relates to a collar for a hand tool such as a shovel or a rake, in particular to a collar comprising a moulded plastic body surrounding the socket-handle interface.

Hand tools such as shovels and rakes typically include a socket portion extending from the tool head to receive the tool handle. Some handles are formed with shoulders towards one end thereof for mating with the end of the socket to provide a generally smooth transition at the socket-handle point of attachment or interface. Other handles are generally uniformly tapered along their entire length so that the end of the socket forms a generally flange-like surface at the socket-handle interface. This abrupt transition between the handle and socket, is not aesthetically pleasing, and also forms a moisture collecting surface which can result in corrosion of the socket.

Accordingly, it is an object of this invention to provide a collar to surround the socket-handle interface so that the socket-handle transition is aesthetically pleasing and, in addition, corrosion resistant.

The present invention provides a collar for use on a hand tool of the type having an elongated socket to receive a tool handle, which collar comprises a moulded plastic body having an outer wall defined by a first tapered portion extending lengthwise of the body from one end toward the middle thereof and a second tapered portion extending lengthwise of the body from the other end towards the middle thereof to form relatively thin wall portions at each end of said body and a relatively thick wall portion at the interface of said first and second tapered portions; the inner wall of the the collar being defined by a first relatively large diameter section and a second relatively small diameter section, with the interface of said first and second sections defining a radially extending flange-like surface, with the end of the socket engaging the flange-like surface, the relatively large diameter section of the inner wall overlaying the outer wall of the socket and the relatively small diameter section of the inner wall overlying the outer wall of the tool handle.

The invention will now be further described with reference to the accompanying drawings, in which

Figure 1 is a perspective view, partially in section, illustrating a preferred embodiment of a collar according to the invention as employed on a hand tool;

Figure 2 is an elevation view, with a collar according to the present invention shown in section;

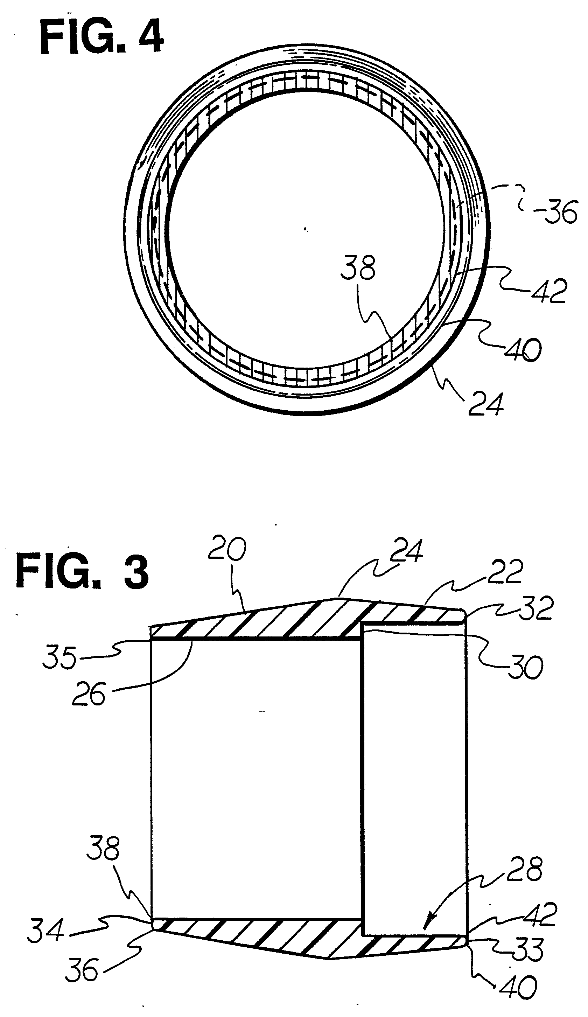

Figure 3 is a sectional view of a collar according to the present invention illustrating details thereof; and

Figure 4 is an end view of a collar according to the invention, taken from the socket end thereof.

A hand tool 10, such as a shovel or rake, generally comprises a socket portion 14 formed integrally with the tool head, such as a blade 18 of a shovel. A handle 12 of the hand tool 10 is secured within the socket 14 as is well known to those skilled in the art. The handle 12 may include a stepped portion at the end which engages the socket to provide a smoother transition from the outer wall of the handle to the outer wall of the socket. Alternatively, the handle 12 may be uniformly tapered from one end to the other which results in a more abrupt transition from the outer wall of the handle to the outer wall of the socket. In fact, since the diameter of the socket is somewhat greater than the diameter of the handle at the point of attachment, the end of the socket defines a radially inwardly extending flange-like surface. It has been found that such a radially inwardly extending surface is not aesthetically appealing and, more importantly, may act as a moisture collecting surface. The moisture collected at the surface causes corrosion and reduces the useful life of the hand tool.

The present invention reduces or substantially obviates the prior art defects by providing an aesthetically appealing transition from the tool handle to the tool socket and, in addition, eliminates the moisture collecting surface which results in the hand tool being more resistant to corrosion.

The present invention comprises a collar 16 formed from a suitable plastic material such as polyvinyl chloride such as manufactured by B.F. Goodrich Company and sold under the product designation Geon 83008. Other suitable plastic material may be substituted for the polyvinyl chloride material used in the preferred embodiment. The collar 16 includes a first tapered portion 20 extending lengthwise of the body of the collar from one end towards the middle. The collar 16 further includes a second tapered portion 22 extending lengthwise of the collar body from the other end of the collar towards the middle thereof. The portion 20 defines the outer surface of a relatively thin wall section 34. Similarly, portion 22 forms the outer surface of a relatively thin wall portion 32. The interface 24 of the tapered portions 20 and 22 defines a relatively thick wall portion 24.

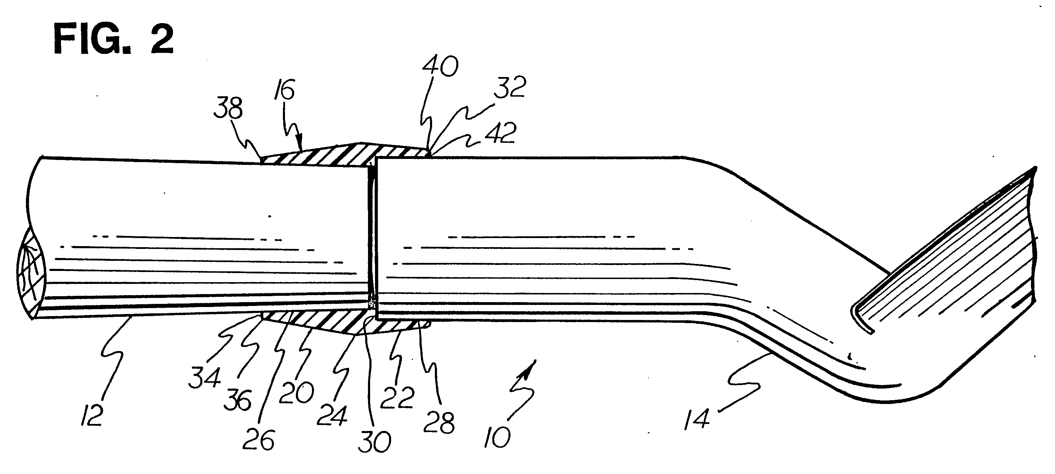

The inner wall of the collar is partially defined by a first relatively large diameter section 28 and a second relatively small diameter section 26. The interface of the first and second sections 26 and 28 define a radially extending flange-like surface 30. The end of the socket 14 rests against the flange-like surface 30 as shown in Figure 2.

The small diameter section 26 terminates in a radially extending flange-like surface 35. The distance between the inner edge 38 and the outer edge 36 of surface 35 is approximately l3mm (.05"). Similarly, the large diameter section 28 terminates in a flange-like surface 33. The distance between the inner and outer edges of surface 33, 42 and 40 respectively is also approximately l3mm (.05").

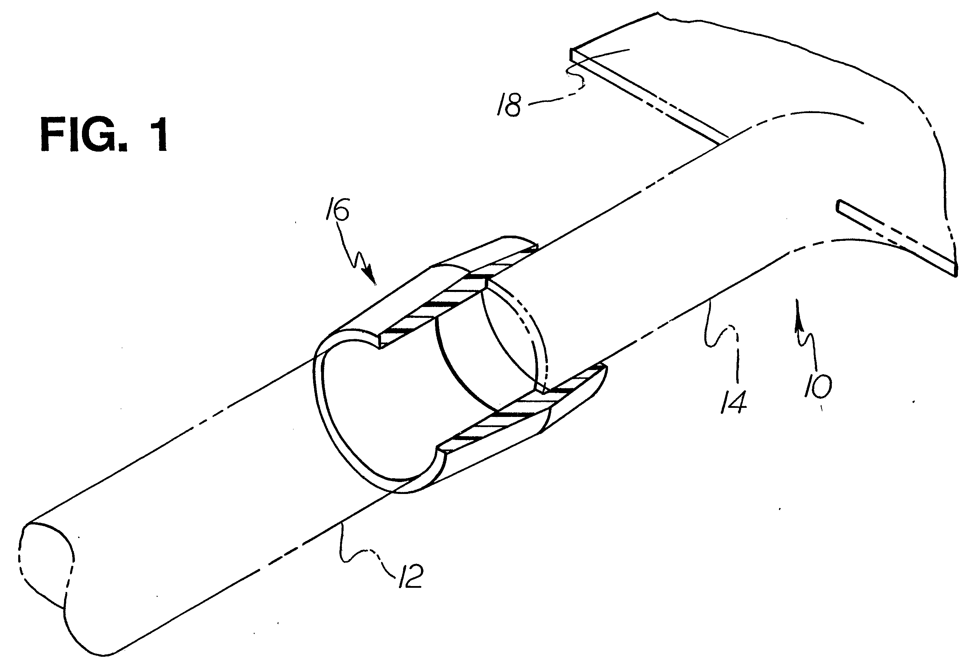

As shown in Figures 1 and 2, the collar 16 surrounds the interface between the handle 12 and the socket 14. Since the walls of the collar taper outwardly from each end towards the middle of the collar, the transition between the socket and handle is no loner abrupt but becomes aesthetically pleasing. In addition, since the collar 16 is formed from plastics material, and the collar surrounds the interface between the handle and socket, the radially extending flange of the socket is consequently covered by the collar. Since the collar is waterproof, this results in an increase in the corrosion resistance of the tool.

The plastics material used to manufacture the collar 16 is also somewhat resilient. Thus, the inner wall of the collar will conform to any irregularities on the outer wall of the socket to maintain the integrity of the waterproof enclosure about the handle-socket interface.

## Claims

1. A collar (16) for use on a hand tool of the type having an elongated socket (14) to receive a tool handle (12), which collar comprises a moulded plastics body having an outer wall defined by a first tapered portion (20) extending lengthwise of the body from one end towards the middle thereof and a second tapered portion (22) extending lengthwise of the body from the other end towards the middle thereof to form relatively thin wall portions (32,34) at each end of said body and a relatively thick wall portion (24) at the interface of said first and second tapered portions, with the inner wall of the collar being defined by a first relatively large diameter section (28) and a second relatively small diameter section (26), with the interface of said first and second sections defining a radially extending flange-like surface (30), with the end of the socket (14) engaging the flange-like surface (30), the relatively large diameter section (28) of the inner wall overlying the outer wall of the socket (14) and the relatively small diameter section (26) of the inner wall overlying the outer wall of the tool handle (12).

2. A collar according to claim 1 in which the surface defining the first section (28) of the inner wall conforms to irregularities in the outer surface of the socket (14).

3. A collar according to claim 1 or claim 2 which is formed from polyvinyl chloride.

**FIG. 1**

EP 0 315 355 A2

FIG. 2

EP 0 315 355 A2

# FIG. 4

# FIG. 3